# EUROPÄISCHE PATENTSCHRIFT

(11) **EP 3 505 955 B1**
(45) Veröffentlichungstag und Bekanntmachung des Hinweises auf die Patenterteilung: **24.06.2020**
(21) Anmeldenummer: 18203497.5
(22) Anmeldetag: 30.10.2018
(51) Int. Cl.: G01S 7/481, G01S 17/02, H05K 5/00, H05K 7/12

(54) **TIME-OF-FLIGHT-SENSORMODUL**
TIME-OF-FLIGHT SENSOR MODULE
MODULE CAPTEUR DE TEMPS DE VOL

(30) Priorität: 29.12.2017 DE 102017131421
(43) Veröffentlichungstag der Anmeldung: 03.07.2019
(73) Patentinhaber: HUF Hülsbeck & Fürst GmbH & Co. KG, 42551 Velbert (DE)
(72) Erfinder: STICHERLING, Nadine, 45257 Essen (DE); HACHE, Christof, 42551 Velbert (DE)
(74) Vertreter: Zenz Patentanwälte Partnerschaft mbB

(56) Entgegenhaltungen:
- DE-A1-102015 115 098
- US-A- 3 833 991
- US-A1- 2002 190 166

## Beschreibung

Die Erfindung betrifft ein Time-of-Flight-Sensormodul, abgekürzt: TOF-Sensormodul, mit einem Gehäuse und einer innerhalb des Gehäuses angeordneten Sensoranordnung.

Time-of-Flight-Sensoranordnungen, oft auch als Time-of-Flight-Kameras bezeichnet, werden in vielen Fällen als 3D-Abbildungssysteme genutzt. Die Time-of-Flight-Sensoranordnungen stellen eine Funktionalität zur Verfügung, die auf der Laufzeitmessung von Licht beruht. Es wird zunächst eine Szenerie pulsweise mit einem Beleuchtungsmittel ausgeleuchtet. Die Laufzeit des emittierten Lichts hin zu der Szenerie und nach der Reflektion durch die Szenerie zu einem Lichtsensor wird ermittelt. Time-of-Flight-Sensoranordnungen sind dem Fachmann aus der Praxis bekannt. DE102015115098A1 offenbart ein TOF-Sensormodul.

Die Nutzung von TOF-Sensoranordnungen ist mit Vorteilen verbunden. Ein Vorteil besteht darin, dass TOF-Sensoranordnungen ohne beweglichen Teile auskommen können, was mit einer vergleichsweisen geringen Anfälligkeit für Verschleißschäden einhergeht und einen wartungsarmen Betrieb ermöglicht. Weitere Vorteile sind eine hohe Bilderfassungsgeschwindigkeit sowie eine bei einer Vielzahl von abzubildenden Oberflächen zuverlässige Bilderfassung.

Time-of-Flight-Sensoranordnungen haben, nicht zuletzt aufgrund der oben genannten Vorteile, eine Vielzahl von Anwendungen gefunden. Auch in der Automobilindustrie werden TOF-Sensoranordnungen häufig genutzt und zunehmend für den Einbau in Kraftfahrzeuge berücksichtigt, beispielsweise für Fahrassistenz- und Sicherheitssensoren oder für Gestenerkennungsanlagen.

Zur Ausleuchtung der abzubildenden Szenerie wird in vielen Fällen Licht verwendet, das für das gesunde menschliche Auge nicht oder nur wenig sichtbar ist. Häufig wird eine Beleuchtung mit Strahlung mit Wellenlängen aus dem nahen Infrarotbereich genutzt, um die abzubildende Szenerie selbst nicht durch den Betrieb des Sensormoduls zu stören oder sonstige Beeinträchtigungen möglichst zu vermeiden.

Um eine möglichst aussagekräftige Abbildung der zu beleuchtenden Szenerie erreichen zu können, ist die Ausleuchtung der Szenerie mit Lichtquellen möglichst höher Abstrahlleistung von Vorteil.

Als weiteres Kriterium muss die Lichtquelle genügend schnell, modulierbar beziehungsweise ansteuerbar sein, in manchen Ausgestaltungen mit einer Genauigkeit der Ansteuerzeiten im Nanosekundenbereich. Typischerweise werden LEDs oder Laserdioden für die Ausleuchtung der abzubildenden Szenerie genutzt.

Da, wie erläutert, typischerweise Leuchtquellen mit hoher Strahlungsintensität und/oder mit einer Emission von nicht sichtbarer Strahlung genutzt werden, ist bei Auslegung entsprechender TOF-Sensoranordnungen zu beachten, dass eventuelle Beeinträchtigungen der Augengesundheit vermieden werden. In ordnungsgemäßem Zustand eines Sensormoduls ist in der Regel durch eine geeignete Einhausung der Lichtquelle und gegebenenfalls durch die Nutzung von speziellen Blenden sichergestellt, dass ein versehentlicher Strahlungseinfall in ein Auge einer in der Umgebung der Sensoranordnung befindlichen Person und eine Schädigung des Auges weitgehend ausgeschlossen werden kann.

Zusätzlich ist wichtig, auch in den seltenen Fällen eines nicht-ordnungsgemäß funktionierenden Sensormoduls möglichst zuverlässig zu vermeiden, dass in unvorhergesehener Weise Lichtstrahlung aus der Leuchtquelle emittiert wird und durch die emittierte Lichtstrahlung ein die Leuchtquelle betrachtendes menschliches Auge geschädigt wird. Ein solcher Fall könnte beispielsweise im Fall eines Aufprallunfalls auftreten. Beispielsweise könnte eine Beschädigung oder Entfernung des Sensorgehäuses und/oder eine fehlerhafte Ansteuerung des Leuchtmittels zu einer ungünstigen Konstellation führen, in der unkontrolliert Licht mit hoher Leistung emittiert wird.

Ungeachtet möglicher Gesundheitsgefahren ist eine unkontrollierte Emission von Licht auch deswegen möglichst zu vermeiden, um in manchen Ländern bestehenden regulativen Anforderungen zu genügen.

Vor diesem Hintergrund besteht der Wunsch, ein Time-of-Flight-Sensormodul bereitzustellen, bei dem auch im Schadensfall eine unvorhergesehene gesundheitsschädigende Emission von Strahlungsleistung mit hoher Sicherheit ausgeschlossen werden kann.

Die Aufgabe wird mit einem Time-of-Flight-Sensormodul mit den Merkmalen des Anspruchs 1 gelöst.

Es ist ein Time-of-Flight-Sensormodul vorgesehen, das ein Gehäuse und eine innerhalb des Gehäuses angeordnete Sensoranordnung aufweist. Das Gehäuse muss die Sensoranordnung nicht zwingend komplett umschließen, jedoch wenigstens die optischen Bestandteile der Sensoranordnung vor äußeren Einwirkungen, wie beispielsweise mechanischer Zugänglichkeit, schützen. Selbstverständlich ist das Gehäuse zumindest im für die Funktionsfähigkeit des TOF-Sensormoduls für Licht der verwendeten Wellenlängen zumindest in ausreichender Weise durchlässig.

Die Sensoranordnung weist eine Platinenanordnung auf. Die Platinenanordnung ist innerhalb des Gehäuses angeordnet und positioniert. Zumindest ein Abschnitt der Platine dient als Optikbereich, auf dem optische Bauelemente der Time-of-Flight-Sensoranordnung angeordnet sind. Der Optikbereich ist ein Bereich der Platinenanordnung der zur Positionierung optischer Bauelemente der Sensoranordnung genutzt wird. Es ist jedoch nicht ausgeschlossen, dass andere Bestandteile der TOF-Sensoranordnung als optische Bauelemente ebenfalls auf dem Optikbereich angeordnet sind. Auch ist nicht ausgeschlossen, dass manche optische Bauelemente außerhalb des Optikbereichs positioniert sind.

Auf dem Optikbereich sind zumindest eine Lichtquelle und ein Lichtsensor angeordnet. Die Lichtquelle dient dem Aussenden von Licht für ein Ausleuchten einer abzubildenden Szenerie, es kann sich insbesondere um eine Laserdiode handeln. Der Begriff des Lichts ist nicht auf für das menschliche Auge sichtbare Licht eingeschränkt, sondern er umfasst den gesamten Wellenlängenbereich elektromagnetischer Strahlung, der für TOF-Sensoranwendungen nutzbar ist. Insbesondere kann die Lichtquelle zur Emission von Licht mit einer oder mehreren Wellenlängen aus dem nahen infraroten Wellenlängenbereich ausgebildet sein, insbesondere mit Wellenlängen zwischen 0,8 Mikrometern und 3,0 Mikrometern.

Der Lichtsensor dient der Detektion von Licht, welches von der Lichtquelle zu einer beleuchtenden Szenerie und von dieser zurück zu dem Lichtsensor reflektiert ist. Der Lichtsensor ist bevorzugt als CCD-Chip ausgebildet, der im Optikbereich auf der Platine befestigt ist.

Weiterhin umfasst die Sensoranordnung eine Steuereinrichtung, die mit der Lichtquelle und mit dem Lichtsensor gekoppelt ist. Die Steuereinrichtung kann beispielsweise als Mikrocontroller ausgebildet sein. Die Steuereinrichtung kann zur autonomen Steuerung des Time-of-Flight-Sensormoduls ausgebildet sein, es kann aber auch vorgesehen sein, dass die Steuereinrichtung einer zusätzlichen Kopplung mit einer externen Ansteuerelektronik bedarf, welche für den Betrieb des Time-of-Flight-Sensormoduls herzustellen ist. Die Steuereinrichtung kann auf dem Optikbereich angeordnet sein, bevorzugt ist sie jedoch auf einem weiteren Bereich der Platinenanordnung angeordnet, der als Elektronikbereich bezeichnet wird.

Vor der Lichtquelle ist eine Lichtoptikfassung positioniert, in der eine Lichtoptik gehalten wird. Vor dem Lichtsensor ist eine Sensoroptikfassung positioniert, in der eine Sensoroptik gehalten wird. Mit der Lichtoptik und der Sensoroptik sind die optischen Eigenschaften des Time-of-Flight-Sensormoduls entsprechend des vorgesehenen Einsatzszenarios eingestellt. Die Lichtoptik und die Sensoroptik können insbesondere jeweils Linsen enthalten. Aber auch weitere optische Bestandteile, wie beispielsweise Blenden, können alternativ oder zusätzlich in der Lichtoptikfassung und/oder der Sensoroptikfassung angeordnet sein. Bevorzugt weist die Lichtoptik eine von der Steuereinrichtung angesteuerte Blende auf, die bei einer Betriebspause des TOF-Sensormoduls geschlossen ist und damit zur Sicherheit der Umgebung des TOF-Sensormoduls vor unbeabsichtigt emittierter Lichtstrahlung beiträgt.

Erfindungsgemäß weist die Sensoranordnung einen Sicherungsbügel auf. Der Sicherungsbügel ist an der Platinenanordnung angeordnet.

Der Sicherungsbügel umgreift die Lichtoptikfassung derart, dass die Kopplung des Sicherungsbügels mit der Platinenanordnung zumindest teilweise getrennt wird in Abhängigkeit davon, dass die Lichtoptik ihre ursprüngliche Position über ein minimales, vernachlässigbares Maß hinaus verändert. Mit anderen Worten: Der Sicherungsbügel befindet sich derart in mechanischer Wirkverbindung mit der Lichtoptikfassung und/oder der Lichtoptik angeordnet, dass die Kopplung des Sicherungsbügels der Platinenanordnung zumindest teilweise getrennt wird in allen Fällen in denen die Lichtoptik ihre vorgesehene, ursprüngliche, Position über ein geringes, gerade noch toleriertes, Maß hinaus verlässt. Das erwähnte gerade noch tolerierte geringe Maß orientiert sich dabei zumindest daran, dass gewährleistet ist, dass ein unvorhergesehenes Emittieren von Licht aus der Lichtquelle bei definierten Bedingungen, die beispielsweise vom Fachmann durch Simulationen oder durch empirische Untersuchungen festgelegt werden, ausgeschlossen werden kann.

Beispielsweise kann vorgesehen sein, dass die Lichtoptik eine Blende umfasst, welche in ihrem Normalzustand die Lichtquelle blockiert, wobei eine Bewegung der Lichtoptik über ein toleriertes Mindestmaß den Sicherungsbügel zumindest teilweise von der Platinenanordnung trennt. Das tolerierte Mindestmaß kann dabei beispielsweise bei einer noch tolerierten Bewegung von maximal 0,1 Millimetern liegen.

Das Trennen der Kopplung des Sicherungsbügels erfolgt bevorzugt rein mechanisch. Der Sicherungsbügel liegt beispielsweise derart an der Lichtoptik und/oder an der Lichtoptikfassung an, dass die Lichtoptik und/oder Lichtoptikfassung bei einer Bewegung in von der Platine wegweisender Richtung, beispielsweise aufgrund einer unfallbedingten Erschütterung, den Sicherungsbügel in von der Platine wegweisender Richtung mitnehmen und dadurch die Verbindung des Sicherungsbügels mit der Platinenanordnung zumindest teilweise trennen. Je nach konkreter konstruktiver Ausgestaltung kann vorgesehen sein, dass eine entsprechende Trennungskraft auf den Sicherungsbügel durch die Lichtoptikfassung, durch die Lichtoptik und/oder in Zusammenwirkung von beiden ausgeübt wird.

Der Begriff des teilweisen Trennens umfasst zumindest, dass die Verbindung zwischen Sicherungsbügel und Platine derart verändert wird, dass die Veränderung zur planmäßigen automatischen Betriebsänderung der Lichtquelle ausreichend ist. Beispielsweise kann die teilweise Trennung als Erhöhung des elektrischen Widerstands an einem Kopplungspunkt zwischen Sicherungsbügel und Platine um einen festgelegten Mindestwert, beispielsweise von 50 Prozent, verstanden werden.

Der in Kopplung mit der Platinenanordnung befindliche Sicherungsbügel ist erfindungsgemäß Teil eines Sicherungsstromkreises. Der Sicherungsstromkreis ist derart ausgebildet, dass das zumindest teilweise Trennen des Sicherungsbügels und der Platinenanordnung voneinander eine automatische Betriebsänderung der Lichtquelle herbeiführt. Mit anderen Worten bewirkt das Außerpositionbringen der Lichtoptik, dass die Kopplung des Sicherungsbügels mit der Platinenanordnung zumindest teilweise getrennt wird, wodurch der Sicherungsstromkreis dahingehend beeinflusst wird, dass automatisch eine Betriebsänderung der Lichtquelle in Reaktion der Änderung der elektrischen Eigenschaften des Sicherungsstromkreises erfolgt.

Bei der automatischen Betriebsänderung der Lichtquelle kann es sich beispielsweise um eine Leistungsverringerung oder um eine vollständige Betriebsverhinderung, mit anderen Worten: Verhinderung einer Spannungsversorgung, der Lichtquelle handeln.

In einer bevorzugten Ausgestaltung des TOF-Sensormoduls ist ein Halteabschnitt des Sicherungsbügels an einem Ende der Lichtoptik angeordnet, das von der Platinenanordnung beabstandet ist. Alternativ oder zusätzlich liegt der Halteabschnitt des Sicherungsbügels an dem von der Platinenanordnung beabstandeten Ende der Lichtoptik und/oder der Lichtoptikfassung an. Besonders bevorzugt ist die Anlage des Halteabschnitts an der Lichtoptik und/oder der Lichtoptikfassung derart ausgeführt, dass bei Außerpositionbringung der Lichtoptik der Sicherungsbügel mechanisch mitgeführt wird und dadurch die teilweise Trennung der Kopplung des Sicherungsbügels mit der Platinenanordnung herbeigeführt wird. Mit anderen Worten liegt ein Teil des Sicherungsbügels, der als Halteabschnitt bezeichnet werden kann, an der Lichtoptik und/oder der Lichtoptikfassung derart an, dass ein Wegbewegen der Lichtoptik den Sicherungsbügel von der Platinenanordnung wegführt oder, bevorzugt, aus dieser herausreißt.

Bevorzugt ist die Lichtoptikfassung in einem Optikgestell angeordnet oder als Bestandteil des Optikgestells ausgebildet. Das Optikgestell ist mit dem Optikbereich verbunden. Der Sicherungsbügel weist bevorzugt eine Rückhalteausformung auf, die eine dem Optikbereich zugewandte Fläche oder Kante des Optikgestells hintergreift. Bevorzugt ist der Sicherungsbügel derart dimensioniert, dass der Halteabschnitt des Sicherungsbügels infolge der durch die Rückhalteausformung herbeigeführten Kraft in Richtung der Lichtoptik und/oder der Lichtoptikfassung vorgespannt ist.

Durch die an der Fläche oder Kante des Optikbereichs angeordneten Rückhalteausformung wird ein versehentliches Entfernen des Sicherungsbügels bei im Normalbetrieb üblichen Erschütterungen vermieden wird oder zumindest auf Ausnahmefälle begrenzt. Besonders bevorzugt ist die Rückhaltausformung derart ausgebildet, dass die Rückhalteausformung eine Federkraft bereitstellt, um eine besonders effiziente kraftschlüssige Fixierung des Halteabschnitts an dem von der Platinenanordnung beabstandeten Ende der Lichtoptik und/oder der Lichtoptikfassung herbeizuführen.

In einer besonders vorteilhaften Ausführungsform weist das Optikgestell eine Führungsausnehmung auf, welche von einer Kante des Optikgestells zu der Lichtoptikfassung hin hinein weisende Ausformrichtung ausgeformt ist. Die Führungsausnehmung begrenzt eine Bewegung des Sicherungsbügels in eine zur Ausformrichtung senkrechten Richtung.

Bevorzugt verhindert die Führungsausnehmung ein Versetzen des Sicherungsbügels in Längsrichtung der Sensoranordnung. Die Längsrichtung der Sensoranordnung ist in einer speziellen Ausbildungsform eine Richtung, welche sowohl zu einer Ebenennormalen der Platinenanordnung als auch zu einer zwei Kopplungspunkte des Sicherungsbügels mit der Platinenanordnung verbindenden Gerade senkrecht orientiert ist. Durch das Bereitstellen einer Führungsausnehmung und das Positionieren des Sicherungsbügels in der Führungsausnehmung wird ein unbeabsichtigtes Umpositionieren des Sicherungsbügels und damit eine unbeabsichtigte Außerfunktionsetzung des Time-of-Flight-Sensormoduls mit hoher Zuverlässigkeit vermieden.

In einer bevorzugten Ausgestaltung des TOF-Sensormoduls ist der Sicherungsbügel als elektrischer Leiter ausgebildet und wirkt als Schalter eines Versorgungsstromkreises für die Lichtquelle, der bei Entkopplung von der Platinenanordnung seine Offenstellung einnimmt und dadurch eine Verringerung oder Unterbrechung der Spannungsversorgung der Lichtquelle herbeiführt. Durch diese Ausgestaltung wird eine inhärente Leistungsverringerung oder völlige Betriebsverhinderung der Lichtquelle ermöglicht, die aufgrund ihrer inhärenten Wirkweise besonders zuverlässig ist.

Gemäß einer anderen vorteilhaften Weiterbildung der Erfindung kann vorgesehen sein, dass der Sicherungsbügel an dem Optikbereich angeordnet ist und mit diesem verbunden ist. Der Sicherungsbügel ist gemäß dieser Ausgestaltung derart die Lichtoptikfassung umgreifend geformt und angeordnet, dass ein Außerpositionbringen der Lichtoptik die Kopplung des Sicherungsbügels mit dem Optikbereich trennt. Der in Kopplung mit dem Optikbereich befindliche Sicherungsbügel ist galvanisch gekoppelter Teil des Sicherungsstromkreises, wobei der Sicherungsstromkreis derart ausgebildet ist, dass das Trennen des Sicherungsbügels und des Optikbereichs voneinander die automatische Betriebsänderung der Lichtquelle herbeiführt. In einer Ausgestaltung kann die Steuereinrichtung eingerichtet sein, einen elektrischen Widerstand zwischen einer ersten Sicherungsbügel-Kontaktstelle mit der Platinenanordnung und einer zweiten Sicherungsbügel-Kontaktstelle mit der Platinenanordnung zu überwachen und bei einer Veränderung des elektrischen Widerstands über eine Schwellveränderung hinaus ein mit der Lichtquelle gekoppeltes Leistungsstellelement anzusteuern zur Spannungsversorgungsverringerung oder Spannungsversorgungsunterbrechung der Lichtquelle. Mit anderen Worten kann vorgesehen sein, dass alternativ zu der inhärenten Betriebsänderung eine aktive Betriebsänderung vorgesehen ist, die auf der Überwachung der Kontaktierung des Sicherungsbügels mit der Platinenanordnung durch die Steuereinrichtung und einer entsprechenden Ansteuerung eines die Spannungsversorgung der Lichtquelle beeinflussenden Bauteils durch die Steuereinrichtung beruht. Selbstverständlich ist in einer derartigen Ausgestaltung eine Überwachungsschaltung zur erforderlichen Überwachung Kopplung zwischen Steuereinrichtung und Sicherungsbügel vorhanden, die für den Fachmann unproblematisch eingerichtet werden kann.

In einer vorteilhaften Ausführungsform kann vorgesehen sein, dass das Gehäuse eine Schutzfensteranordnung aufweist, die vor der Lichtquelle und vor dem Lichtsensor positioniert ist zum Transmittieren von aus der Lichtquelle gesendetem Licht zu einem Gehäuseäußeren und zum Transmittieren von an der abzubildenden Szenerie reflektiertem Licht in ein Gehäuseinneres hinein zu dem Lichtsensor hin.

Mit anderen Worten ist die Schutzfensteranordnung derart vor der Lichtquelle und vor dem Lichtsensor positioniert, dass ein vorgesehener Strahlengang von der Lichtquelle zu dem Gehäuseäußeren durch die Schutzfensteranordnung hindurch verläuft sowie ein Strahlengang von aus dem Lichtsensor stammenden und an einer dem Time-of-Flight-Sensormodul im vorgesehenen Betrieb gegenüberliegenden Szenerie reflektiertem Licht zu dem Lichtsensor hin durch die Schutzfensteranordnung hindurch verläuft. Die Schutzfensteranordnung weist einen ersten Schutzfensterabschnitt und einen zweiten Schutzfensterabschnitt auf, wobei der Strahlengang des aus der Lichtquelle emittierten Lichts zu dem Gehäuseäußeren durch den ersten Schutzfensterabschnitt verläuft und der Strahlengang des reflektierten Lichts in das Gehäuse hinein zu dem Lichtsensor durch den zweiten Schutzfensterabschnitt hin verläuft. Mit anderen Worten ist der erste Schutzfensterabschnitt vor der Lichtquelle angeordnet und der zweite Schutzfensterabschnitt vor dem Lichtsensor angeordnet. In einer speziellen Ausgestaltung kann dies beispielsweise bedeuten, dass eine zentrale optische Achse der Lichtquelle durch den ersten Schutzfensterabschnitt verläuft und eine zentrale optische Achse des Lichtsensors durch den zweiten Schutzfensterabschnitt hindurch verläuft. Hingegen muss nicht zwangsläufig ausgeschlossen sein, dass auch Streulicht des Lichtsensors durch den zweiten Schutzfensterabschnitt hindurchgelangt und/oder reflektiertes Licht durch den ersten Schutzfensterabschnitt zu dem Lichtsensor hingelangt.

Beispielsweise ist vorgesehen, dass der erste Schutzfensterabschnitt und der zweite Schutzfensterabschnitt mittels einer Lichtbarriere teilweise oder vollständig optisch voneinander getrennt sind. Mit anderen Worten ist eine Lichtbarriere vorgesehen, welche ein Leiten von Licht von dem ersten Schutzfensterabschnitt zu dem zweiten Schutzfensterabschnitt und/oder von dem zweiten Schutzfensterabschnitt zu dem ersten Schutzfensterabschnitt zumindest teilweise, bevorzugt vollständig, unterbindet.

In einem einfachen Fall kann beispielsweise vorgesehen sein, dass der erste Schutzfensterabschnitt und der zweite Schutzfensterabschnitt jeweils als unabhängige Durchtrittsscheibe ausgebildet sind, wobei die beiden Durchtrittsscheiben mit einem Luftspalt voneinander getrennt sind. Alternativ oder zusätzlich kann vorgesehen sein, dass die Lichtbarriere als Barriereelement ausgebildet ist, welcher innerhalb des Raums angeordnet ist, der den ersten Schutzfensterabschnitt und den zweiten Schutzfensterabschnitt voneinander trennt.

Weitere Einzelheiten, Merkmale und Vorteile des Gegenstandes der Erfindung ergeben sich aus der nachfolgenden Beschreibung im Zusammenhang mit den Zeichnungen. Die Zeichnungen geben beispielhaft ein Ausführungsbeispiel der Erfindung wieder.

Es versteht sich, dass die vorstehend genannten wie auch die nachfolgend erläuterten Merkmale nicht nur in der jeweils angegebenen Kombination, sondern auch in anderen Kombinationen oder in Alleinstellung verwendbar sind.

Es zeigen:
Fig. 1: Sensoranordnung eines erfindungsgemäßen Time-of-Flight-Sensormoduls ohne Gehäuse;
Fig. 2: Sensoranordnung des erfindungsgemäßen Sensormoduls ohne Gehäuse und vor vollständigem Zusammenfügen;
Fig. 3: Schrägansicht der Sensoranordnung ohne Gehäuse und mit nicht-angeordnetem Sicherungsbügel;
Fig. 4: Beispielhafte Ausgestaltung eines Optikgestells mit Sicherungsbügel;
Fig. 5 bis Fig. 7: Verschiedene Darstellungen einer Sensoranordnung ohne Gehäuse;
Fig. 8: Schnittdarstellung im Schnitt A-A der Fig. 1;
Figs. 9 bis 10: Sensoranordnung des erfindungsgemäßen Sensormoduls mit Gehäuse in zwei Schrägansichten mit unterschiedlichen Sichtwinkeln

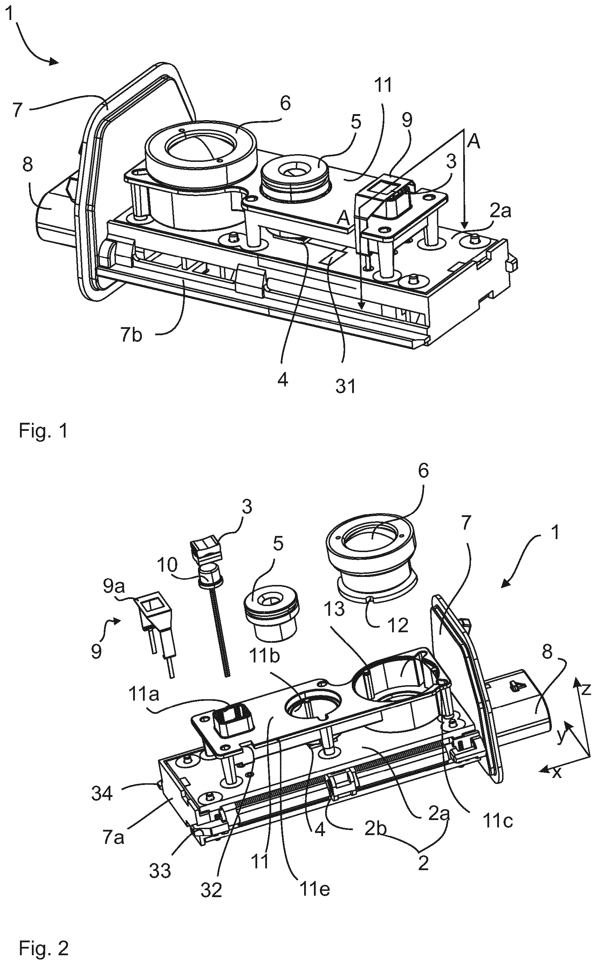

Fig. 1 ist eine Sensoranordnung 1 einer beispielhaften Ausführungsform eines erfindungsgemäßen Time-of-Flight-Sensormoduls zu entnehmen. Die Sensoranordnung 1 weist einen Optikbereich 2a einer Platinenanordnung 2 auf. Der Optikbereich 2a trägt insbesondere die optischen Elemente der Sensoranordnung 1. Die Sensoranordnung 1 weist zum einen eine als Laserdiode ausgebildete Lichtquelle auf, welche in Fig. 1 nicht zu sehen ist, da sie von der vor der Lichtquelle angeordneten Lichtoptik 3 verdeckt ist. Die Lichtoptik 3 dient der Einstellung der von der Lichtquelle bereitgestellten Laserstrahlung für das Ausleuchten einer abzubildenden Szenerie, wobei in der gezeigten Ausgestaltung eine zweiachsige Streuung des Lichts mittels zweier hintereinander angeordneter Zylinderlinsen erfolgt, die mit senkrecht zueinander orientierter Zylinderachse als Bestandteil der Lichtoptik 3 in dem Optikgestell 11 angeordnet sind. Als weiteres weist die Sensoranordnung 1 einen Sicherungsbügel 9 auf, welcher zur mechanischen Fixierung der Lichtoptik 3. In der gezeigten Ausgestaltung ist der Sicherungsbügel 9 mit dem Optikbereich 2a elektrisch kontaktiert und derart mit der Steuereinrichtung 31 verbunden, dass bei Entfernung des Sicherungsbügels 9, beispielsweise infolge eines Unfalls, eine Stromversorgung der Lichtquelle unterbunden wird, um entsprechende Sicherheitsanforderungen zu erfüllen.

Zur Detektion von aus der Lichtquelle ausgesendetem und danach von einer abzubildenden Szenerie zu dem Lichtsensor reflektiertem Licht ist ein als CCD-Sensor ausgebildeter Lichtsensor 4 auf dem Optikbereich 2a angeordnet und ebenfalls mit der Steuereinrichtung 31 verbunden. Zur Fokussierung der von der Szenerie reflektierten Lichtstrahlung auf den Lichtsensor 4 ist eine Sensoroptik 5 vorgesehen, welche von einer in einem entsprechenden Einsatz eingebrachten und von diesem gehaltenen Sensoroptik 5 bereitgestellt wird. Zur Ausleuchtung eines Zielbereichs ist eine, ebenfalls mit der nicht sichtbaren Steuereinrichtung gekoppelte, Spot-Diode 6 vorgesehen. Zur kompakten Ausführung der Sensoranordnung 1 ist das Optikgestell 11 mittels entsprechender Steckelemente mit der Platine 2 verbunden, die ihrerseits mit einem Trägerabschnitt 7b des Moduleinsatzes 7 gekoppelt ist. Der Moduleinsatz 7 weist als einstückigen Bestandteil ein Steckelement 8 auf, welches zur elektrischen Kontaktierung des Time-of-Flight-Sensormoduls mit einer kraftfahrzeugseitigen Steuereinrichtung vorgesehen ist.

In der Darstellung der Fig. 2 sind die Lichtquelle 10 mit der ihr zugeordneten Lichtoptik 3 und dem entsprechenden Sicherungsbügel 9, die Sensoroptik 5 sowie die Spot-Diode 6 im nicht an dem Trägerabschnitt 7b des Moduleinsatzes 7 angeordneten Zustand dargestellt. Es ist erkennbar, dass das Optikgestell 11 als einstückiges Aufnahmeelement für die optischen Bestandteile der Spot-Diode 6, der Sensoroptik 5 sowie der Lichtoptik 3 ausgebildet sind, wobei die genannten Elemente und das Optikgestell 11 derart aufeinander angepasst sind, dass ein unverzügliches Einführen und, soweit gewünscht, Arretieren der optischen Bestandteile 3, 5 und 6 in die Aufnahmeöffnungen 11a, 11b, 11c des Optikgestells 11 möglich ist, wodurch eine zügige und exakte Positionierung der genannten optischen Elemente möglich ist. Beispielhaft seien die Nut 12 und die zugeordnete Feder 13 der Spot-Diodenoptik 6 genannt, mit welcher eine exakte Winkelpositionierung der Spot-Diodenoptik 6 erreicht werden kann.

Das Optikgestell 11 weist eine Führungsausnehmung 32 auf. Die Führungsausnehmung ist ausgehend von einer Kante 11e des Optikgestells 11 in eine zur Normale der Platinenebene und in eine zur Längserstreckung des Trägerabschnittes 7b senkrechten Richtung ausgeformt, welche in der Ausgestaltung der Fig. 2 eine Tiefenerstreckung des Optikgestells ist und die gemäß der in Fig. 2 dargestellten Konvention die y-Richtung ist. Die Ausformungen des Optikgestells 11 und des Sicherungsbügels 9 sind derart aufeinander abgestimmt, dass das Optikgestell 11 den Sicherungsbügel 9 nach dessen Anordnung an dem Optikbereich an einer Bewegung in x- und y-Richtung hindert. Dies erlaubt, den Sicherungsbügel 9 mit ausreichender Genauigkeit zu positionieren, um die Lichtoptikfassung 11a zu umgreifen und den Halteabschnitt 9a des Sicherungsbügels 9 vor der Lichtoptik 3 und vor der Lichtoptikfassung 11a, also an einem von der Platinenebene abgewandten Ende des Optikgestells, an die Lichtoptik 3 anzulegen. Mit dem Anlegen der Lichtoptik 3 wird die gewünschte Krafteinwirkung der Lichtoptik 3 und/oder der Lichtoptikfassung 11a auf den Sicherungsbügel 9 im Falle einer unplanmäßigen Außerpositionbewegung der Lichtoptik 3 herbeigeführt. Die Gleitschienen 33 und 34 dienen dem Einführen des Optikmoduls in entsprechende Aufnahmeführungen des Gehäuses.

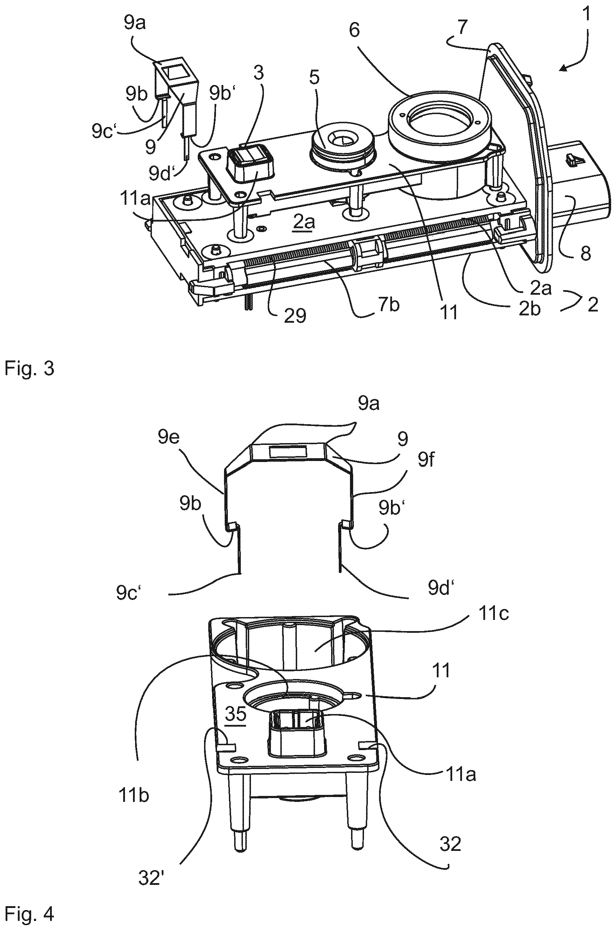

Die Darstellung der Fig. 3 unterscheidet sich von der Darstellung der Fig. 2 dahingehend, dass bis auf den Sicherungsbügel 9 alle Elemente an dem Optikgestell und damit an dem Trägerabschnitt 7b des Moduleinsatzes 7 angeordnet sind. Fig. 2 ist die Schwenkverbindung 29 zu entnehmen, die Optikbereich 2a und Elektronikbereich 2b miteinander verbindet. Der Optikbereich 2a und der Elektronikbereich 2b sind miteinander verschwenkt und an zwei voneinander beabstandeten Enden des Trägerabschnitts 7b angeordnet. Diese Konstruktion bietet den Vorteil einer platzsparenden Ausgestaltung.

Der Sicherungsbügel 9 umfasst neben dem Halteabschnitt 9a die Rückhalteausformungen 9b, 9b' sowie die Kontaktstreben 9c', 9d'.

In Fig. 4 sind das Optikgestell 11 mit der Lichtoptikfassung 11a, der Sensoroptikfassung 11b und der Spot-Diodenoptikfassung 11c sowie der Sicherungsbügel 9 in einer anderen Perspektive dargestellt. Es ist erkennbar, dass die Führungsausnehmungen 32 und 32' zur Aufnahme der Strebenabschnitte 9e und 9f dimensioniert und positioniert sind. Die Rückhalteausformungen 9b und 9b' sind ausgebildet, nach Anordnen des Sicherungsbügels in den Führungsausnehmungen 32, 32' die in der gezeigten Darstellung sichtbare Ebene 35 des Optikgestells zu hintergreifen und mit den Rückhalteausformungen 9b, 9b' an der nicht Sichtbaren Rückseite eine Widerkraft herbeizuführen. Die Strebenenden 9c' und 9d' dienen als Kontaktierungsenden des Sicherungsbügels 9.

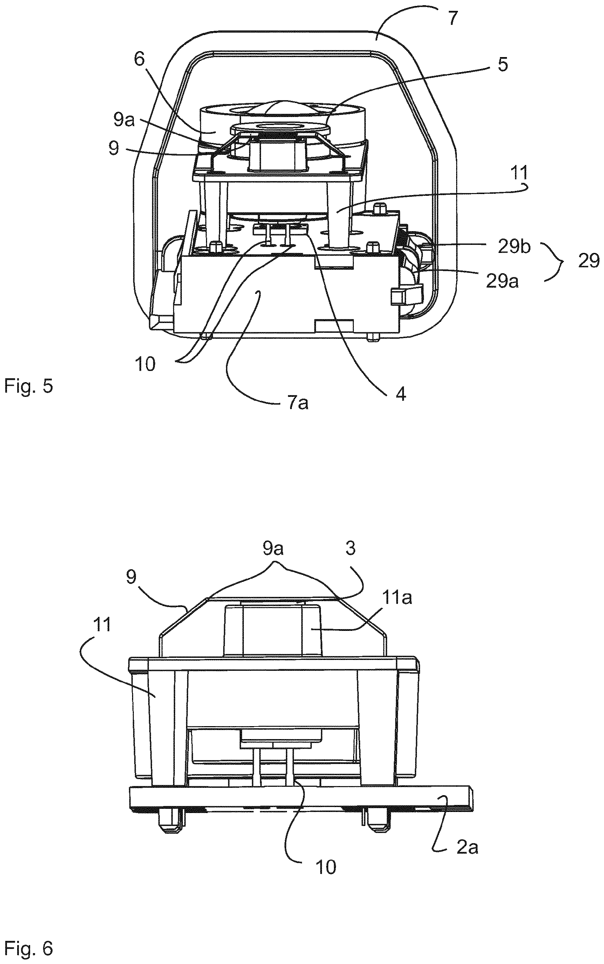

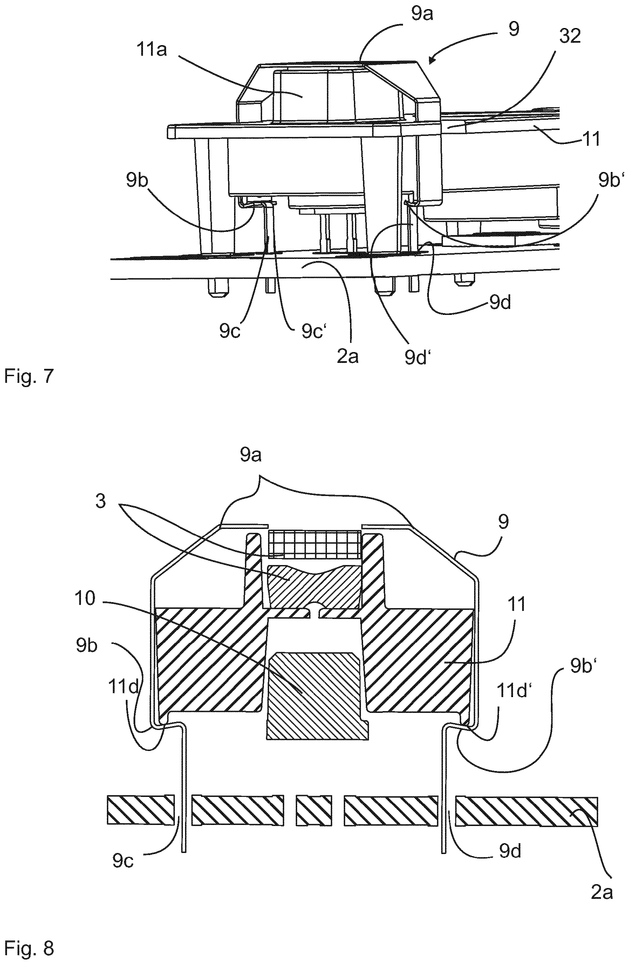

In Figs. 5 bis 7 sind unterschiedliche perspektivische Ansichten des in der Platinenanordnung 2 angeordneten Sicherungsbügels 9 dargestellt. Insbesondere ist Fig. 7 zu entnehmen, wie Strebenende 9c' an Kontaktierungsstelle 9c und Strebenende 9d' an Kontaktierungsstelle 9d eine Kontaktierung mit dem Optikbereich herbeiführt.

In Fig. 8 ist ein Schnitt in der in Fig. 1 gekennzeichneten Ebene A-A dargestellt. Der Schnittdarstellung ist insbesondere zu entnehmen, wie die Rückhalteausformungen 9b, 9b' eine dem Optikbereich 2a zugewandte Fläche des Optikgestells 11 beidseitig an den Positionen 11d, 11d' hintergreift. Durch das Hintergreifen wird zur kraftschlüssigen Fixierung des Halteabschnitts 9a des Sicherungsbügels 9 an dem von dem Optikbereich beabstandeten Ende der Lichtoptikfassung 11a beigetragen.

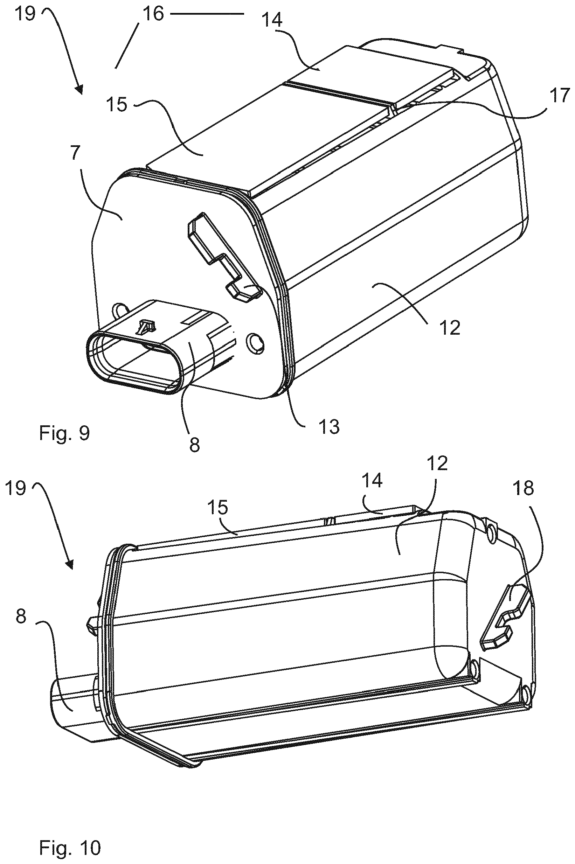

Fig. 9 ist eine Darstellung des Time-of-Flight-Sensormoduls 1 zu entnehmen. Das Sensormodul 1 besteht aus der in den Figs. 1 und 2 dargestellten Sensoranordnung 1 und dem Gehäuse 12, in dem die Sensoranordnung eingeführt ist. Das Gehäuse 12 schließt Staub- und weitgehend feuchtigkeitsdicht an den Moduleinsatz 7 an. Vor der Lichtquelle und dem Lichtsensor ist eine Schutzfensteranordnung 16 positioniert, wobei Lichtquelle und Lichtsensor in der Darstellung der Fig. 9 nicht erkennbar sind, da sie sich innerhalb des Gehäuses befinden. Wie Fig. 9 weiterhin zu entnehmen ist, besteht die Schutzfensteranordnung 16 aus einem ersten Schutzfenster 14 und einem zweiten Schutzfenster 15. Zwischen dem ersten Schutzfenster 14 und dem zweiten Schutzfenster 15 ist eine Lichtbarriere 17 ausgebildet, welche in der abgebildeten Ausführungsform als Zwischenelement ausgeformt ist. Die Lichtbarriere ist somit zwischen den Schutzfenstern 14 und 15 angeordnet und trennen diese vollständig voneinander, um einen Übertritt von Licht von dem ersten Schutzfenster zu dem zweiten Schutzfenster zu unterbinden. Die Lichtbarriere 17 ist in der vorliegenden Ausführungsform als einstückige Erhabung des Gehäuses 12 vorgesehen. Der Abbildung der Fig. 9 ist weiterhin ein erstes Führungselement 13 zu entnehmen, mit welchem das Gehäuse 12 und damit das Sensormodul in eine auf die Ausformung des ersten Führungselements angepasste Führungsschiene, beispielsweise an einem Fahrzeug, an dem Steckelement 8 mit einer fahrzeugseitigen Elektronik verbunden werden kann.

In Fig. 10 ist das Sensormodul 19 von einer anderen Perspektive aus zu sehen. Insbesondere ist zu erkennen, dass auch an dem Gehäuse 12 ein zweites Führungselement 18 angeordnet ist, so dass zusätzlich zu dem ersten Führungselement 13 das zweite Führungselement 18 zum Einführen des Sensormoduls in entsprechende Halteschienen ermöglicht wird.

## Patentansprüche

1. Time-of-Flight-Sensormodul (19), aufweisend ein Gehäuse (12) und eine innerhalb des Gehäuses (12) angeordnete Sensoranordnung (1), wobei die Sensoranordnung (1) aufweist:
- eine Platinenanordnung (2), die innerhalb des Gehäuses (12) angeordnet ist, wobei die Platinenanordnung (2) einen als Optikbereich (2a) genutzten Platinenabschnitt zum Tragen optischer Bauelemente der Sensoranordnung aufweist,
- eine auf dem Optikbereich (2a) angeordnete Lichtquelle (10) zum Aussenden von Licht für ein Ausleuchten einer abzubildenden Szenerie,
- ein auf dem Optikbereich (2a) angeordneter Lichtsensor (4) zum Detektieren von aus der Lichtquelle (10) ausgesendetem und danach von der abzubildenden Szenerie reflektiertem Licht,
- eine Steuereinrichtung (31), die mit der Lichtquelle (10) und mit dem Lichtsensor (4) gekoppelt ist, und
- eine vor der Lichtquelle (10) angeordnete Lichtoptikfassung (11a), in der eine Lichtoptik (3) angeordnet ist, und eine vor dem Lichtsensor (4) angeordnete Sensoroptikfassung (11b), in der eine Sensoroptik (5) angeordnet ist,
**dadurch gekennzeichnet, dass** die Sensoranordnung (1) einen Sicherungsbügel (9) aufweist, der an der Platinenanordnung (2) angeordnet ist, wobei der Sicherungsbügel (9) derart die Lichtoptikfassung (11a) umgreifend angeordnet ist, dass ein Außerpositionbringen der Lichtoptik (3) die Kopplung des Sicherungsbügels (9) mit der Platinenanordnung (2) zumindest teilweise trennt,
wobei der in Kopplung mit der Platinenanordnung (2) befindliche Sicherungsbügel (9) galvanisch gekoppelter Teil eines Sicherungsstromkreises ist, wobei der Sicherungsstromkreis derart ausgebildet ist, dass das zumindest teilweise Trennen des Sicherungsbügels (9) und der Platinenanordnung (2) voneinander eine automatische Betriebsänderung der Lichtquelle (10) herbeiführt.

2. Sensormodul (19) nach Anspruch 1, **dadurch gekennzeichnet, dass** ein Halteabschnitt (9a) des Sicherungsbügels (9) an einem von der Platinenanordnung (2) beabstandeten Ende der Lichtoptik (3) und/oder an einem von der Platinenanordnung (2) beabstandeten Ende der Lichtoptikfassung (11a) anliegt zur mechanischen Mitführung des Sicherungsbügels (9) bei Außerpositionbringen der Lichtoptik (10) zur zumindest teilweisen Trennung der Kopplung des Sicherungsbügels (9) mit der Platinenanordnung (2).

3. Sensormodul (19) nach Anspruch 2, **dadurch gekennzeichnet, dass** die Lichtoptikfassung (11a) in einem mit dem Optikbereich (2a) verbundenen Optikgestell (11) angeordnet ist, wobei der Sicherungsbügel (9) wenigstens eine Rückhalteausformung (9b, 9b') aufweist, die eine dem Optikbereich zugewandte Fläche oder Kante (11d, 11d') des Optikgestells (11) hintergreift zur zumindest auch kraftschlüssigen Fixierung des Halteabschnitts (9a) des Sicherungsbügels (9) an dem von der Platinenanordnung (2) beabstandeten Ende der Lichtoptik (3) und/oder an dem von der Platinenanordnung (2) beabstandeten Ende der Lichtoptikfassung (11a).

4. Sensormodul (19) nach Anspruch 3, **dadurch gekennzeichnet, dass** das Optikgestell (11) eine Führungsausnehmung (32, 32') aufweist, die in eine von einer Optikgestellkante (11e) in eine Tiefenerstreckung (y) des Optikgestells (11) zu der Lichtoptikfassung (11a) gerichtet ausgeformt ist, zur Positionierung des Sicherungsbügels (9) in eine Längserstreckung (x) des Sensormoduls, bevorzugt in eine zur Ausformungsrichtung der Führungsausnehmung (32, 32') senkrechte Richtung.

5. Sensormodul (19) nach einem der vorhergehenden Ansprüche, **dadurch gekennzeichnet, dass** der Sicherungsbügel (9) als elektrischer Leiter ausgebildet ist, der als Schalter eines Versorgungsstromkreises für die Lichtquelle (10) wirkt mit einer Offenstellung zur Spannungsversorgungsverringerung oder Spannungsversorgungsunterbrechung, wobei die Offenstellung der zumindest teilweisen Trennung des Sicherungsbügels von der Platinenanordnung entspricht.

6. Sensormodul (19) nach einem der vorhergehenden Ansprüche, **dadurch gekennzeichnet, dass** der Sicherungsbügel (9) an dem Optikbereich (2a) angeordnet ist, wobei der Sicherungsbügel (9) derart die Lichtoptikfassung (11a) umgreifend angeordnet ist, dass ein Außerpositionbringen der Lichtoptik (3) die Kopplung des Sicherungsbügels (9) mit dem Optikbereich (2a) trennt,
wobei der in Kopplung mit dem Optikbereich (2a) befindliche Sicherungsbügel (9) Teil des Sicherungsstromkreises ist, der derart ausgebildet ist, dass das zumindest teilweise Trennen des Sicherungsbügels (9) von dem Optikbereich (2a) die automatische Betriebsänderung der Lichtquelle (10) herbeiführt.

7. Sensormodul (19) nach einem der vorhergehenden Ansprüche, **dadurch gekennzeichnet, dass** die Steuereinrichtung (31) mit dem Sicherungsbügel galvanisch gekoppelt ist und eingerichtet ist, einen elektrischen Widerstand zwischen einer ersten Sicherungsbügelkontaktstelle (9c) und einer zweiten Sicherungsbügelkontaktstelle (9d) zu überwachen und bei einer Veränderung des elektrischen Widerstands, die größer als eine Schwellveränderung ist, ein mit der Steuereinrichtung (31) und mit der Lichtquelle (10) gekoppeltes Leistungsstellelement anzusteuern zur Spannungsversorgungsverringerung oder Spannungsversorgungsunterbrechung der Lichtquelle (10).

8. Sensormodul (19) nach einem der vorhergehenden Ansprüche, **dadurch gekennzeichnet, dass** das Gehäuse (2) eine Schutzfensteranordnung (16) aufweist, die vor der Lichtquelle (10) und vor dem Lichtsensor (4) positioniert ist zum Transmittieren von aus der Lichtquelle (10) gesendetem Licht zu einem Gehäuseäußeren und zum Transmittieren von an der abzubildenden Szenerie reflektiertem Licht in ein Gehäuseinneres hinein zu dem Lichtsensor (4) hin.

9. Sensormodul (19) nach einem der vorhergehenden Ansprüche, **dadurch gekennzeichnet, dass** die Platinenanordnung einen Elektronikbereich (2b) aufweist, wobei bevorzugt die Steuereinrichtung (31) auf dem Elektronikbereich (2b) angeordnet ist, wobei der Optikbereich und der Elektronikbereich mittels einer Schwenkverbindung (29) mechanisch miteinander verbunden sind,
wobei die Platinenanordnung (2) an einem Trägerabschnitt (7b) eines Moduleinsatzes (7) der Sensoranordnung angeordnet ist, wobei die Platinenanordnung (2) derart mittels der Schwenkverbindung (29) verklappt ist, dass der Optikbereich (2a) an einer ersten Seite (20) des Trägerabschnitts (7b) mit dem Trägerabschnitt (7b) verbunden ist und der Elektronikbereich (2b) an einer zweiten Seite (21) des Trägerabschnitts (7b) mit dem Trägerabschnitt (7b) verbunden ist, so dass der Trägerabschnitt (7b) zumindest mit einem Abschnitt des Trägerabschnitts (7b) zwischen dem Optikbereich (2a) und dem Elektronikbereich (2b) angeordnet ist.

10. Sensormodul nach einem der vorhergehenden Ansprüche, **dadurch gekennzeichnet,**
**dass** die Lichtquelle (10) eine Laserdiode aufweist oder als Laserdiode ausgebildet ist, oder
**dass** die Lichtquelle (10) eine LED aufweist oder als LED ausgebildet ist, und/oder
**dass** der Lichtsensor (4) einen CCD-Chip aufweist.

## Claims

1. Time-of-flight sensor module (19), having a housing (12) and a sensor assembly (1) arranged inside the housing (12), wherein the sensor assembly (1) includes:
- a plate assembly (2) which is arranged inside the housing (12), wherein the plate assembly (2) has a plate section used as an optics area (2a) for supporting optical components of the sensor assembly,
- a light source (10) mounted on the optics area (2a) for emitting light for an illumination of a scene that is to be imaged,
- a light sensor (4) mounted on the optics area (2a) for detecting light which is emitted from the light source (10) and subsequently reflected by the scene that is to be imaged,
- a control device (31) which is coupled with the light source (10) and with the light sensor (4), and
- a light optics socket (11a) which is arranged in front of the light source (10), in which a light optics device (3) is arranged, and a sensor optics socket (11b) arranged in front of the light sensor (4) in which a sensor optics device (5) is arranged,
**characterized in that**
the sensor assembly (1) has a securing bracket (9) which is mounted on the plate assembly (2),
wherein the securing bracket (9) is arranged so as to clasp the light optics socket (11a) in such a way that a shifting of the light optics device (3) out of position at least partially separates the coupling between the securing bracket (9) and the plate assembly (2),
wherein the securing bracket (9) which is coupled to the plate assembly (2) is a galvanically coupled part of a backup electrical circuit, wherein the backup electrical circuit is designed in such manner that the at least partial separation of the securing bracket (9) and the plate assembly (2) from each other causes an automatic change in the operation of the light source (10).

2. Sensor module (19) according to Claim 1, **characterized in that** a retaining portion (9a) of the securing bracket (9) is in contact with an end of the light optics device (3) which is farthest from the plate assembly (2) and/or with an end of the light optics socket (11a) which is farthest from the plate assembly (2) for the mechanical entrainment of the securing bracket (9) when the light optics device (10) is shifted out of position in order to at least partially separate the coupling of the securing bracket (9) with the plate assembly (2).

3. Sensor module (19) according to Claim 2, **characterized in that** the light optics socket (11a) is arranged in an optics base frame (11) which is connected to the optics area (2a), wherein the securing bracket (9) has at least one restraining formation (9b, 9b') which clasps behind a surface or edge (11d, 11d') of the optics base frame (11) facing the optics area to ensure that the retaining portion (9a) of the securing bracket (9) is also secured at least by a frictional connection on the end of the light optics device (3) farthest from the plate assembly (2) and/or on the end of the light optics socket (11a) farthest from the plate assembly (2).

4. Sensor module (19) according to Claim 3, **characterized in that** the optics base frame (11) has a guide recess (32, 32') which is conformed in an edge of the optics base frame (11e) to extend in a downward direction (y) of the optics base frame (11) relative to the light optics socket (11a) for the purpose of positioning the securing bracket (9) in a lengthwise direction (x) of the sensor module, preferably in a direction perpendicular to the direction of conformation of the guide recess (32, 32').

5. Sensor module (19) according to any one of the preceding claims, **characterized in that** the securing bracket (9) is embodied as an electrical conductor which functions as a switch for a power supply circuit for the light source (10), with an open position for reducing the voltage supply or interrupting the voltage supply, wherein the open position corresponds to the at least partial separation of the securing bracket from the plate assembly.

6. Sensor module (19) according to any one of the preceding claims, **characterized in that** the securing bracket (9) is mounted on the optics area (2a), wherein the securing bracket (9) is arranged to clasp the light optics socket (11a) in such manner that a shifting of the light optics device (3) out of position separates the coupling between the securing bracket (9) and the optics area (2a),
wherein the securing bracket (9) which is coupled to the optics area (2a) is part of the backup electrical circuit, which is designed in such manner that the at least partial separation of the securing bracket (9) from the optics area (2a) causes an automatic change in the operation of the light source (10).

7. Sensor module (19) according to any one of the preceding claims, **characterized in that** the control device (31) is galvanically coupled with the securing bracket and is configured to monitor an electrical resistance between a first securing bracket contact site (9c) and a second securing bracket contact site (9d), and in the event of a variation in the electrical resistance which is greater than a threshold variation to actuate a power adjusting element that is coupled to the control device (31) and to the light source (10) in order to reduce the voltage supply or interrupt the voltage supply to the light source (10).

8. Sensor module (19) according to any one of the preceding claims, **characterized in that** the housing (2) is furnished with a protective window arrangement (16) which is positioned in front of the light source (10) and in front of the light sensor (4) for transmitting light that is emitted from the light source (10) to a location outside the housing and for transmitting light that is reflected from the scene that is to be imaged to a location inside the housing towards the light sensor (4).

9. Sensor module (19) according to any one of the preceding claims, **characterized in that** the plate assembly has an electronics area (2b), wherein the control device (31) is preferably arranged on the electronics area (2b), wherein the optics area and the electronics area are connected to each other mechanically via a swivel connection (29),
wherein the plate assembly (2) is mounted on a support section (7b) of a module insert (7) of the sensor assembly, wherein the plate assembly (2) is folded together by means of the swivel connection (29) in such manner that the optics area (2a) is connected to the support section (7b) on a first side (20) of the support section (7b) and the electronics area (2b) is connected to the support section (7b) on a second side (21) of the support section (7b), so that the support section (7b) arranged with at least a portion of the support section (7b) between the optics area (2a) and the electronics area (2b).

10. Sensor module according to any one of the preceding claims, **characterized in**
**that** the light source (10) includes a laser diode or is embodied as a laser diode, or
**that** the light source (10) includes a LED or is embodied as a LED, and/or
**that** the light sensor (4) includes a CCD chip.

## Revendications

1. Module capteur de temps de vol (19), comportant un boîtier (12) et un ensemble de capteurs (1) placé à l'intérieur du boîtier (12), l'ensemble de capteurs (1) comportant :
- un ensemble de cartes de circuits imprimés (2), qui est placé à l'intérieur du boîtier (12), l'ensemble de cartes de circuits imprimés (2) comportant un segment de cartes de circuits imprimés utilisé en tant que zone optique (2a), destiné à porter des composants optiques de l'ensemble de capteurs,
- une source lumineuse (10) placée sur la zone optique (2a), destinée à émettre de la lumière pour éclairer une scène qui doit être reproduite,
- un capteur de lumière (4) placé sur la zone optique (2a), destiné à détecter de la lumière émise à partir de la source lumineuse (10) et réfléchie ensuite par la scène qui doit être reproduite,
- un système de commande (31), qui est connecté avec la source lumineuse (10) et avec le capteur de lumière (4), et
- une douille pour optique lumineuse (11a) placée à l'avant de la source lumineuse (10), dans laquelle est placée une optique lumineuse (3) et une douille pour optique de capteur (11b) placée à l'avant du capteur de lumière (4), dans laquelle est placée une optique de capteur (5),
**caractérisé en ce que**
l'ensemble de capteurs (1) comporte un étrier de sécurité (9) qui est placé sur l'ensemble de cartes de circuits imprimés (2),
l'étrier de sécurité (9) étant placé en enserrant la douille pour optique lumineuse (11a), de telle sorte qu'une mise hors position de l'optique lumineuse (3) désolidarise au moins partiellement la connexion entre l'étrier de sécurité (9) et l'ensemble de cartes de circuits imprimés (2),
l'étrier de sécurité (9) qui se trouve en connexion avec l'ensemble de cartes de circuits imprimés (2) étant une partie galvaniquement connectée d'un circuit électrique de sécurité, le circuit électrique de sécurité étant conçu de telle sorte, que la désolidarisation au moins partielle de l'étrier de sécurité (9) et de l'ensemble de cartes de circuits imprimés (2) provoque une modification fonctionnelle automatique de la source lumineuse (10).

2. Module capteur (19) selon la revendication 1, **caractérisé en ce qu'**un segment de maintien (9a) de l'étrier de sécurité (9) est adjacent à une extrémité de l'optique lumineuse (3) qui est distante de l'ensemble de cartes de circuits imprimés (2) et/ou à une extrémité de la douille pour optique lumineuse (11a) qui est distante de l'ensemble de cartes de circuits imprimés (2), pour l'entraînement mécanique de l'étrier de sécurité (9) lors d'une mise hors position de l'optique lumineuse (10), pour la désolidarisation au moins partielle de la connexion entre l'étrier de sécurité (9) et l'ensemble de cartes de circuits imprimés (2).

3. Module capteur (19) selon la revendication 2, **caractérisé en ce que** la douille pour optique lumineuse (11a) est placée dans une monture d'optique (11) reliée avec la zone optique (2a), l'étrier de sécurité (9) comportant au moins une empreinte de retenue (9b, 9b') qui saisit par l'arrière une surface ou arête (11d, 11d') de la monture d'optique (11) qui fait face à la zone optique, pour la fixation au moins également par complémentarité de force du segment de maintien (9a) de l'étrier de sécurité (9) sur l'extrémité distante de l'ensemble de cartes de circuits imprimés (2) de l'optique lumineuse (3) et/ou sur l'extrémité distante de l'ensemble de cartes de circuits imprimés (2) de la douille pour optique lumineuse (11a).

4. Module capteur (19) selon la revendication 3, **caractérisé en ce que** la monture d'optique (11) comporte un évidement de guidage (32, 32') qui est façonné en étant dirigé d'une arête de monture d'optique (11e) dans une extension en profondeur (y) de la monture d'optique (11) vers la douille pour optique lumineuse (11a), pour le positionnement de l'étrier de sécurité (9) dans une extension longitudinale (x) du module capteur, de préférence dans une direction perpendiculaire à la direction de façonnage de l'évidement de guidage (32, 32').

5. Module capteur (19) selon l'une quelconque des revendications précédentes, **caractérisé en ce que** l'étrier de sécurité (9) est conçu sous la forme d'un conducteur électrique qui fait office de commutateur d'un circuit de courant d'alimentation pour la source lumineuse (10), avec une position d'ouverture pour réduire l'alimentation en tension ou pour interrompre la tension d'alimentation, la position d'ouverture correspondant à la désolidarisation au moins partielle de l'étrier de sécurité de l'ensemble de cartes de circuits imprimés.

6. Module capteur (19) selon l'une quelconque des revendications précédentes, **caractérisé en ce que** l'étrier de sécurité (9) est placé sur la zone optique (2a), l'étrier de sécurité (9) étant placé en enserrant la douille pour optique lumineuse (11a) de telle sorte qu'une mise hors position de l'optique lumineuse (3) désolidarise la connexion entre l'étrier de sécurité (9) et la zone optique (2a),
l'étrier de sécurité (9) qui se trouve en connexion avec la zone optique (2a) étant une partie du circuit électrique de sécurité, qui est conçue de telle sorte que la désolidarisation au moins partielle de l'étrier de sécurité (9) de la zone optique (2a) provoque la modification fonctionnelle automatique de la source lumineuse (10).

7. Module capteur (19) selon l'une quelconque des revendications précédentes, **caractérisé en ce que** le système de commande (31) est galvaniquement connecté avec l'étrier de sécurité et est aménagé pour superviser une résistance électrique entre un premier point de contact de l'étrier de sécurité (9c) et un deuxième point de contact de l'étrier de sécurité (9d) et lors d'une variation de la résistance électrique qui est supérieure à une variation seuil, pour activer un élément de réglage de la puissance connecté avec le système de commande (31) et avec la source lumineuse (10), pour réduire l'alimentation en tension ou pour interrompre l'alimentation en tension de la source lumineuse (10)

8. Module capteur (19) selon l'une quelconque des revendications précédentes, **caractérisé en ce que** le boîtier (2) comporte un ensemble de fenêtre de sécurité (16) qui est positionné à l'avant de la source lumineuse (10) et à l'avant du capteur de lumière (4), pour la transmission de lumière émise à partir de la source lumineuse (10) vers un extérieur de boîtier et pour la transmission de lumière réfléchie sur la scène qui doit être reproduite dans un intérieur de boîtier vers le capteur de lumière (4).

9. Module capteur (19) selon l'une quelconque des revendications précédentes, **caractérisé en ce que** l'ensemble de cartes de circuits imprimés comporte une zone électronique (2b), le système de commande (31) étant placé de préférence sur la zone électronique (2b), la zone optique et la zone électronique étant mécaniquement reliées l'une à l'autre au moyen d'une liaison pivotante (29),
l'ensemble de cartes de circuits imprimés (2) étant placé sur un segment de support (7b) d'un insert modulaire (7) de l'ensemble de capteurs, l'ensemble de cartes de circuits imprimés (2) étant enclenché au moyen de la liaison pivotante (29) de telle sorte que la zone optique (2a) soit reliée sur un premier côté (20) du segment de support (7b) avec le segment de support (7b) et que la zone électronique (2b) soit reliée sur un deuxième côté (21) du segment de support (7b) avec le segment de support (7b), de sorte que le segment de support (7b) soit placé au moins par une partie du segment de support (7b) entre la zone optique (2a) et la zone électronique (2b).

10. Module capteur selon l'une quelconque des revendications précédentes, **caractérisé**
**en ce que** la source lumineuse (10) comporte une diode laser ou est conçu sous la forme d'une diode laser, ou
**en ce que** la source lumineuse (10) comporte une LED ou est conçue sous la forme d'une LED, et/ou
**en ce que** le capteur de lumière (4) comporte une puce CCD.
